# EUROPÄISCHE PATENTANMELDUNG

(11) **EP 1 555 201 A1**
(43) Veröffentlichungstag der Anmeldung: **20.07.2005**
(21) Anmeldenummer: 04000981.3
(22) Anmeldetag: 19.01.2004
(51) Int. Cl.: B62M 7/02, B62K 11/02

(54) **Elektroroller**

(71) Anmelder: Meyer, Uwe, 46147 Oberhausen (DE)
(72) Erfinder: Meyer, Uwe, 46147 Oberhausen (DE)
(74) Vertreter: Nunnenkamp, Jörg, Dr.

(57) **Zusammenfassung**

Gegenstand der vorliegenden Erfindung ist ein Elektroroller, welcher mit wenigstens einem Vorderrad (3) sowie einem Hinterrad (4) ausgerüstet ist. Zusätzlich finden sich eine Gabel (6) mit Lenker (7) sowie ein Sitz (8). Ein Elektromotor (1), welcher von einem Akkumulator (2) mit elektrischer Energie versorgt wird, sorgt für den Antrieb des Elektrorollers. Erfindungsgemäß ist der Akkumulator (2) in einem in Fahrtrichtung (F) hinter dem Sitz (8) befindlichen Heckbürzel (11) angeordnet.

## Beschreibung

Die Erfindung betrifft einen Elektroroller, mit wenigstens einem Vorderrad sowie einem Hinterrad, einer Gabel mit Lenker und einem Sitz, und mit einem Elektromotor, welcher von einem Akkumulator mit elektrischer Energie versorgt wird, wobei der Akkumulator in einem in Fahrtrichtung hinter dem Sitz befindlichen Heckbürzel angeordnet ist.

Unter einem Elektroroller versteht die vorliegende Erfindung wie allgemein üblich einen von einem Elektromotor angetriebenen Motorroller, also ein Kraftrad bzw. Zweirad, welches ohne Knieschluss gefahren wird und dessen Triebwerk voll verkleidet ist. Vorliegend wird die Energie zum Betrieb des Elektromotors von dem Akkumulator zur Verfügung gestellt, um einen kabelunabhängigen Betrieb wie bei einem von einem Verbrennungsmotor angetriebenen Motorroller zu gewährleisten.

Bei einem Elektroroller entsprechend der DE 201 05 588 U1 bzw. gemäß ES 1 038 733 U1 ist der Akkumulator in etwa mittig im Vergleich zu einem Rahmenunterzug im Durchtrittsbereich zwischen Sitz und Lenker unterhalb einer Verkleidung angeordnet. Das mag aus Gründen einer schwerpunktnahen Anbringung des Akkumulators vorteilhaft sein, birgt jedoch Nachteile in sich, wenn es darum geht, den Akkumulator (wieder) zu laden. Noch deutlicher wird dies, wenn der Akkumulator ausgetauscht werden soll, was nur mit erheblichem Aufwand möglich ist.

Verbesserungen hat an dieser Stelle der gattungsbildende Stand der Technik nach der US 5 894 898 insofern zur Verfügung gestellt, als dort der Akkumulator in Fahrtrichtung in einem hinter einem Sitz befindlichen Heckbürzel angeordnet ist. Dafür beschränkt sich die Verkleidung an dieser Stelle auf den Heckbürzel, ist insbesondere mit hochgeschleudertem Spritzwasser vom Vorderrad und von der Seite her zu rechnen. Dadurch werden die Einsatzmöglichkeiten deutlich beschnitten.

Vergleichbares gilt für die ebenfalls gattungsgemäße GB 2 290 508 A, die einen Elektroroller gänzlich ohne Verkleidungsmaßnahmen zum Gegenstand hat.

Sofern in der EP 1 164 049 A1 einzelne Verkleidungsteile zeichnerisch dargestellt sind, lassen sie sich nur im Zuge komplizierter Maßnahmen fertigen und anbringen, erschweren also die Handhabung und Zugänglichkeit zum Akkumulator. - Nichts anderes gilt für die US 4 802 682.

Der Erfindung liegt das technische Problem zugrunde, einen Elektroroller der eingangs beschriebenen Ausführungsform so weiter zu entwickeln, dass eine ästhetisch ansprechende und kostengünstige Verkleidung zur Verfügung gestellt wird, die gleichzeitig eine problemlose Zugänglichkeit des obligatorischen Akkumulators ermöglicht.

Zur Lösung dieser technischen Problemstellung ist ein gattungsgemäßer Elektroroller erfindungsgemäß dadurch gekennzeichnet, dass der Heckbürzel zusammen mit einer Seitenverkleidung sowie einer Vorderradverkleidung eine einteilige Schalenkonstruktion bilden. Dabei mag der Heckbürzel neben dem Akkumulator den Elektromotor verkleiden, um beide vorgenannten Aggregate schmutzgeschützt und vor unerlaubtem Zugriff zu sichern. - Bei dem Heckbürzel handelt es sich wie üblich um ein Verkleidungsteil, welches am Rahmen angebracht ist und sich an eine Sitzbank eines motorgetriebenen Zweirades anschließt bzw. in Fahrtrichtung hinter dem Sitz angeordnet ist.

Dabei mag der betreffende Heckbürzel von außen, insbesondere von oben her, zugänglich ausgeführt sein. Das gelingt am einfachsten, indem der Heckbürzel eine öffenbare, insbesondere abnehmbare oder aufschwenkbare, Abdeckung aufweist. Unterhalb dieser Abdeckung befindet sich unmittelbar der Akkumulator mit seinen für die elektrische Ladung erforderlichen Anschlüssen bzw. Polen, so dass die Anbringung von Ladekabeln problemlos gelingt. Auch der Austausch des Akkumulators ist unschwer möglich.

Denn hierzu muss lediglich die betreffende Abdeckung geöffnet werden, so dass der Akkumulator frei zugänglich wird. Diese gesamten Tätigkeiten kann ein Anwender unschwer verrichten, weil der Akkumulator hinter dem Sitz angeordnet ist und unmittelbar durch Öffnen der Abdeckung von oben her zugänglich wird.

Wenn darüber hinaus noch der Akkumulator oberhalb des Hinterrades und in unmittelbarer Nachbarschaft zu einer Sitzstange für den Sitz an dem Rahmen befestigt ist, kann davon ausgegangen werden, dass sich der betreffende Akkumulator in etwa in Kniehöhe oder noch darüber eines Bedieners befindet. Dadurch wird der Akkumulator unschwer zugänglich, was der bisherige Stand der Technik nicht zu liefern vermochte.

Aus Gründen der Ästhetik und um eine kostengünstige Fertigung zu erreichen, ist der Heckbürzel im Rahmen der Erfindung mit der Seiten- und der Vorderradverkleidung zu der einteiligen Schalenkonstruktion zusammengefasst. Hierbei kann es sich um ein Monocoque aus gegebenenfalls mehreren Schichten handeln. Denkbar ist die Verwendung unterschiedlicher Kunststoffe, aber auch eine Sandwichstruktur aus einem Metall (Aluminium) und einem Kunststoff. In der Regel wird man bei der Realisierung der einteiligen Schalenkonstruktion jedoch auf ein Kunststoffspritzgussteil aus Polyethylen (PE), Polypropylen (PP), Polykarbonat (PC) oder auch Mischungen dieser Kunststoffe zurückgreifen.

Der Elektromotor wird größtenteils unterhalb des Akkumulators in einer zwischen dem Hinterrad und der Sitzstange verbleibenden Aussparung bzw. Nische angeordnet. Dadurch ist er nah zum Akkumulator platziert, nämlich unterhalb desselben. Auf diese Weise können die Verbindungsleitungen zwischen dem Akkumulator und dem Elektromotor kurz und damit widerstandsarm gehalten werden.

Es hat sich bewährt, wenn der Akkumulator auf einer im Wesentlichen parallel zu einer Hinterradschwinge angeordneten Halterung ruht. Die Hinterradschwinge dient dabei mit einer oder zwei Schwingenenden dazu, das Hinterrad - gegebenenfalls federnd - aufzunehmen. Dabei mag die betreffende Halterung zur Aufnahme des Akkumulators ergänzend dazu dienen, die Sitzstange für den Sitz mit der Hinterradschwinge zu verbinden. Sitzstange, Halterung und Hinterradschwinge bilden eine insgesamt U-förmige Rahmenkonstruktion, die durch jeweils einen ergänzenden Vertikalsteg parallel zur Sitzstange und als Verbindung der Halterung mit der Hinterradschwinge zu einem Rahmenrechteck vervollständigt wird. Dieses Rahmenrechteck nimmt in der in Fahrtrichtung oberen Ecke den Elektromotor auf, weil diese Ecke mit der Aussparung zwischen dem Hinterrad und der Sitzstange im Wesentlichen zusammenfällt.

Ein an die Halterung angeschlossener Spritzschutz, welcher das Hinterrad vom rückwärtigen Rand der Halterung an beginnend abdeckt, sorgt dafür, dass vom Hinterrad hochgewirbeltes Spritzwasser nicht den Akkumulator sowie den Elektromotor erreicht. Dieser Spritzschutz ist in der Regel als von der bereits beschriebenen Schalenkonstruktion unabhängiges Bauteil ausgeführt, wenngleich er aber auch in diese Schalenkonstruktion integriert sein kann.

Die Hinterradschwinge geht in einen gleichgerichteten Rahmenunterzug über, welcher frontseitig die Gabel mit dem Lenker und dem Vorderrad trägt. Dadurch kann für den Rahmenunterzug und die Hinterradschwinge ein durchgängiger Rechteckrahmen genutzt werden, was die Fertigungskosten gering hält und gleichzeitig die Stabilität erhöht. Dabei mag der Rahmenunterzug mit seitlichen Halterungen ausgerüstet sein, die zur Befestigung der einteiligen Schalenkonstruktion dienen.

Im Ergebnis wird ein Elektroroller zur Verfügung gestellt, der sich durch die exponierte Anordnung des Akkumulators hinter dem Sitz, oberhalb des Hinterrades und geschützt unter einer nach oben hin öffenbaren Abdeckung in dem Heckbürzel bzw. der einteiligen Schalenkonstruktion auszeichnet. Dadurch wird der Akkumulator problemlos und mit bisher nicht gekanntem Komfort zugänglich. Trotz der im Vergleich zum Stand der Technik erhöhten Lage des Akkumulators wird das Fahrverhalten praktisch nicht negativ beeinflusst.

Denn die Erfindung hat erkannt, dass der Schwerpunkt des kombinierten Systems aus Fahrer und Elektroroller hauptsächlich durch die Schwerpunktlage des Fahrers vorgegeben wird, die ihrerseits wesentlich von dessen Sitzhaltung abhängt, wobei der zugehörige Fahrerschwerpunkt in jedem Fall deutlich höher als derjenige des Elektrorollers angesiedelt ist. Kurz und gut spielt die Positionierung des Akkumulators - auch wegen der im Vergleich zum Gesamtsystem geringen Masse - praktisch keine Rolle. Demgegenüber überwiegen die Vorteile bei der Handhabung und dem Aufladen.

Hinzu kommt, dass sich der Elektroroller durch seine besondere Stabilität auszeichnet, die unter anderem daraus resultiert, dass die Halterung für den Akkumulator zusammen mit einem Vertikalsteg, der Sitzstange und der Hinterradschwinge ein Rahmenrechteck im Heckbereich bildet. Gleichzeitig erfährt die Hinterradschwinge eine gleichgerichtete Verlängerung in Gestalt des Rahmenunterzuges, welcher ergänzend zur Stabilisierung und einfachen Fertigung beiträgt. Hierin sind die wesentlichen Vorteile zu sehen.

Im Folgenden wird die Erfindung anhand einer lediglich ein Ausführungsbeispiel darstellenden Zeichnung näher erläutert; Es zeigen:

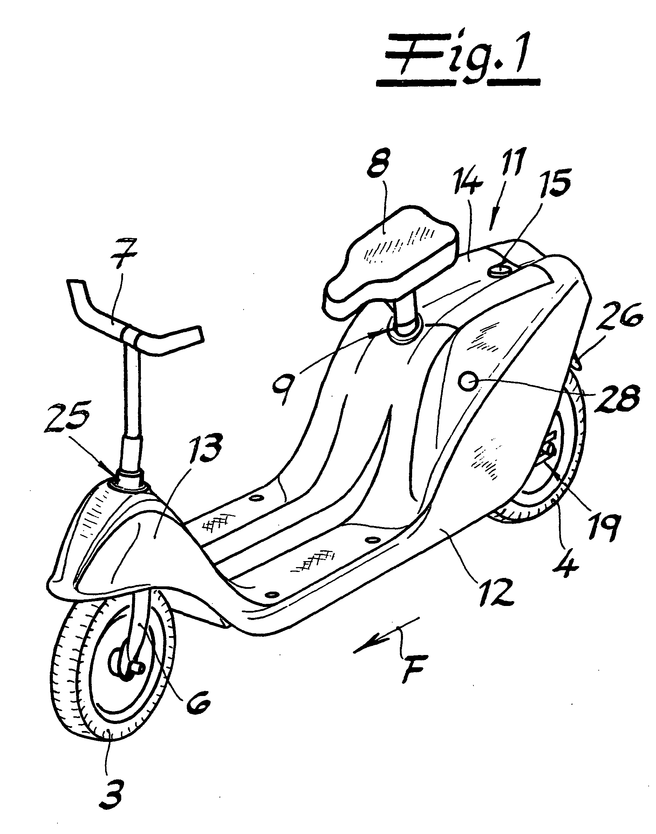

- **Fig. 1:**: den erfindungsgemäßen Elektroroller mit montierter einteiliger Schalenkonstruktion in perspektivischer Ansicht,

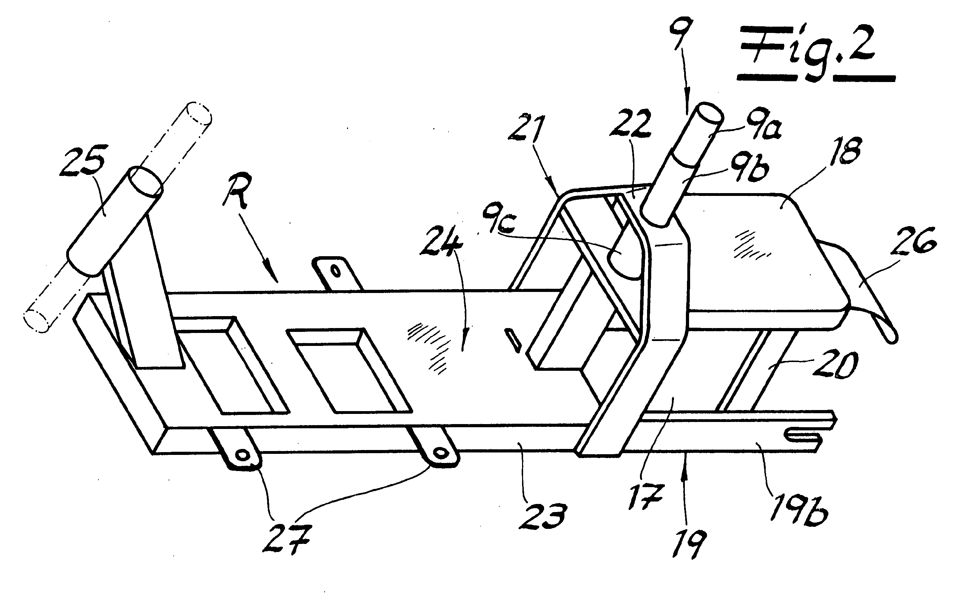

- **Fig. 2:**: den Gegenstand nach Fig. 1 bei abgenommener Schalenkonstruktion in einer Perspektive,
- **Fig. 3:**: den Gegenstand nach Fig. 2 in Seitenansicht und

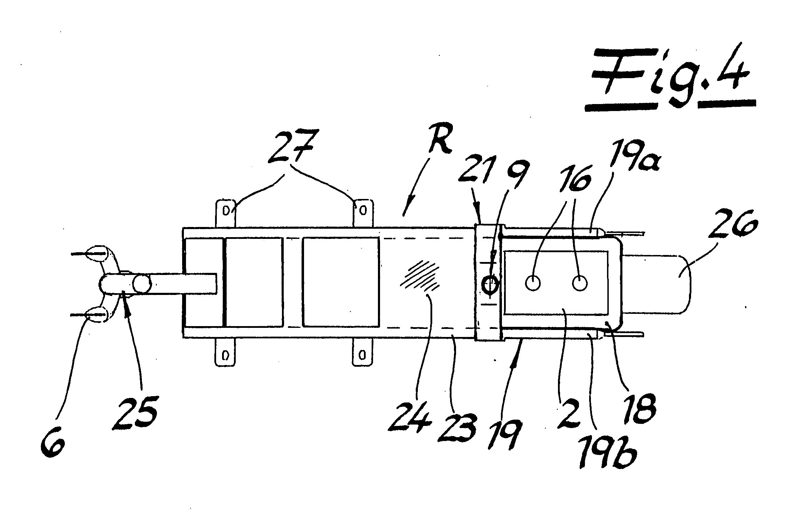

- **Fig. 4:**: den Gegenstand nach den Fig. 2 und 3 in Aufsicht.

In den Figuren ist ein Elektroroller dargestellt, also ein von einem Elektromotor 1 angetriebener Roller, mithin ein Zweirad, welches ohne Knieschluss gefahren wird und dessen Elektromotor 1 bzw. Antrieb im Ganzen größtenteils verkleidet ist. Der Elektroroller verfügt neben dem Elektromotor 1, welcher von einem Akkumulator 2 mit elektrischer Energie versorgt wird, über ein Vorderrad 3 sowie ein Hinterrad 4.

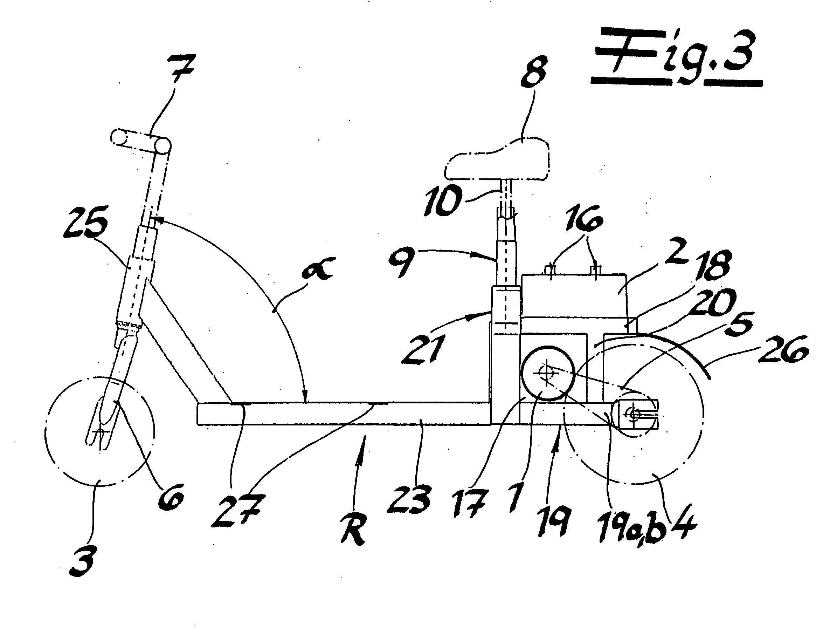

Im Rahmen des Ausführungsbeispiels und nicht einschränkend arbeitet der Elektromotor 1 ausschließlich auf das Hinterrad 4, wenngleich ergänzend oder alternativ auch ein Antrieb des Vorderrades 3 denkbar ist und umfasst wird. Für den Antrieb des Hinterrades 4 sorgt eine lediglich in Fig. 3 angedeutete Kette 5. Auch ein Zahnriemen ist denkbar, der ähnlich aufgebaut sein mag, wie in der DE 201 05 588 U1 beschrieben wird. Ebenso liegt eine Verbindung des Elektromotors 1 mit dem Hinterrad 4 über eine Kardanwelle im Rahmen der Erfindung.

Neben dem Vorderrad 3 und dem Hinterrad 4 gehören zum Fahrgestell des Elektrorollers 1 zusätzlich noch eine Gabel 6 mit Lenker 7 und ein Sitz 8, welcher höhenverstellbar in einer Sitzstange 9 aufgenommen wird. Zu diesem Zweck verfügt die Sitzstange 9 über mehrere Hohlzylinderabschnitte 9a, 9b und 9c, die einen im Wesentlichen gleichen Innendurchmesser aufweisen, allerdings in Richtung auf einen Rahmen R hin mit jeweils wachsendem Außendurchmesser ausgerüstet sind.

Dadurch wird ein einwandfreier Halt eines an den Sitz 8 angeschlossenen Tauchrohres 10 innerhalb der Sitzstange 9 bei möglichst geringem Materialeinsatz erreicht. Denn die Erfindung geht von der Erkenntnis aus, dass Biegebeanspruchungen der Sitzstange 9 durch den mit Hilfe des Tauchrohres 10 eingesteckten Sitz 8 beginnend von der Basis der Sitzstange 9 bzw. dessen Hohlzylinderabschnitt 9c über den Hohlzylinderabschnitt 9b und 9a hin abnehmen. Dieser Gesetzmäßigkeit wird durch die in gleicher Weise abnehmende Wandstärke der genannten Hohlzylinderabschnitte 9c, 9b und 9a entsprechend Rechnung getragen.

Von besonderer Bedeutung ist nun der Umstand, dass der Akkumulator 2 in einem in Fahrtrichtung F hinter dem Sitz 8 befindlichen Heckbürzel 11 angeordnet ist. Der Heckbürzel 11 bildet zusammen mit einer Seitenverkleidung 12 sowie einer Vorderradverkleidung 13 eine insgesamt einteilige Schalenkonstruktion 11, 12, 13. Diese einteilige Schalenkonstruktion 11, 12, 13 mag aus einem Spritzkunststoff gefertigt sein oder sogar mehrere Schichten, beispielsweise Metall und Kunststoff, aufweisen. Jedenfalls befindet sich der Akkumulator 2 im Gegensatz zum bisherigen Stand der Technik nicht vor, sondern hinter dem Sitz 8, und zwar oberhalb des Hinterrades 4 und in unmittelbarer Nachbarschaft zu der Sitzstange 9. Das erkennt man besonders deutlich in der Fig. 3.

Der Heckbürzel 11 ist von außen her zugänglich ausgeführt. Tatsächlich findet sich in der einteiligen Schalenkonstruktion 11, 12, 13 an dieser Stelle eine öffenbare Abdeckung 14, die zum Laden des Akkumulators 2 beispielsweise aus der Schalenkonstruktion 11, 12, 13 herausgelöst werden kann. Das geschieht durch manuelle Betätigung eines zugehörigen Druckknopfes 15. Selbstverständlich liegt es im Rahmen der Erfindung, an dieser Stelle auch mit einer klapp- bzw. schwenkbaren Abdeckung 14 zu arbeiten, die nach dem Öffnungsvorgang unverändert mit der Schalenkonstruktion 11, 12, 13 beispielsweise über ein Scharnier verbunden ist.

Entscheidend ist jedoch der Umstand, dass sich die Abdeckung 14 von oben her öffnen bzw. entfernen lässt, so dass der Akkumulator 2 mit seinen Polen bzw. Anschlüssen 16 unmittelbar für die Verbindung mit Ladekabeln zugänglich wird. Weil sich der Akkumulator 2 oberhalb des Hinterrades 4 in direkter Nachbarschaft zur Sitzstange 9 befindet, gelingt die Anbringung der Ladekabel an den Polen 16 bei entfernter Abdeckung 14 problemlos. Denn die Einbauhöhe des Akkumulators 2 entspricht in etwa der Kniehöhe eines Bedieners.

Die gleichen Vorteile können geltend gemacht werden, wenn der Akkumulator 2 zu Ladezwecken oder schlicht und einfach zum Austausch durch die öffenbare Abdeckung 14 hindurch entfernt werden soll. So ist es beispielsweise denkbar, mit einer Ladebuchse 28 zu arbeiten, die sich im Bereich des Übergangs vom Heckbürzel 11 zur Seitenverkleidung 12 in der einteiligen Schalenkonstruktion 11, 12, 13 im Wesentlichen unterhalb des Sitzes 8 befindet. In diesem Fall wird man auf die Zugänglichkeit der Anschlüsse 16 verzichten und vielmehr einen zu der Ladebuchse 28 korrespondierenden Ladestecker mit zugehörigem Netzgerät für das Aufladen des Akkumulators 2 einsetzen.

Der Elektromotor 1 nutzt für seine Anordnung eine unterhalb des Akkumulators 2 zwischen dem Hinterrad 4 und der Sitzstange 9 verbleibende Aussparung 17. Dadurch ist der Elektromotor 1 automatisch in unmittelbarer Nähe zum Akkumulator 2 angeordnet, so dass die elektrischen Zuleitungen kurz und widerstandsarm gehalten werden können.

Dabei sorgt eine Halterung 18 in Gestalt einer Tragplatte 18 zur Aufnahme des Akkumulators 2 und die jeweilige Befestigung des Akkumulators 2 wie des Elektromotors 1 am Rahmen R. Die Halterung bzw. Tragplatte 18 ist im Wesentlichen parallel zu einer Hinterradschwinge 19 angeordnet, welche zwischen zwei zugehörigen Schwingenarmen bzw. Schwingenenden 19a, 19b das Hinterrad 4 - gegebenenfalls federnd - führt. Mit Hilfe von Vertikalstreben 20 stützt sich die Halterung bzw. Tragplatte 18 an ihrem in Fahrtrichtung F hinteren Ende jeweils an einem Schwingenarm 19a respektive 19b ab.

Das in Fahrtrichtung F vordere Ende der Halterung bzw. Tragplatte 18 findet Halt an einem U-förmigen Bügel 21, dessen U-Basis 22 die Sitzstange 9 mittig aufnimmt. Der U-förmige Bügel 21 stützt sich seinerseits an Rahmenunterzügen 23 ab, in welche die Schwingenarme 19a, 19b in Fahrtrichtung F gleichgerichtet übergehen. Das heißt, die Rahmenunterzüge 23 und die Schwingenarme 19a, 19b bilden jeweils ein durchgängiges Rahmenrohr 19a, 23; 19b, 23, welche beide zusammengenommen endseitig das Hinterrad 4 zwischen sich aufnehmen.

Die Halterung 18 verbindet die Sitzstange 9 mit der Hinterradschwinge 19 durch die Vertikalstreben 20. Diese sorgen in Verbindung mit dem U-förmigen Bügel 21 dafür, dass in Seitenansicht jeweils Rahmenrechtecke 19a, 21, 18 und 20; 19b, 21, 18 und 20 gebildet werden, die für die nötige Stabilität im Bereich des Hinterrades 4 sorgen (vgl. Fig. 3) .

Hierzu trägt ergänzend eine Verbindungsplatte 24 bei, welche die beiden Rahmenunterzüge 23 miteinander koppelt. An ihrem in Fahrtrichtung F frontseitigen Ende tragen die beiden Rahmenunterzüge 23 ein Lenkerrohr 25, welches gegenüber den Rahmenunterzügen 23 in einem Winkel α von 60° bis 100°, insbesondere 70° bis 90°, vorzugsweise ca. 80°, geneigt ist und die Gabel 6 mit dem Vorderrad 3 drehbar aufnimmt .

Ein an die Halterung bzw. Tragplatte 18 angeschlossener Spritzschutz 26 sorgt dafür, dass von dem Hinterrad 4 hochgewirbeltes Spritzwasser weder den Elektromotor 1 noch den Akkumulator 2 erreicht. Schließlich sind noch seitliche Halterungen 27 an den Rahmenunterzügen 23 vorgesehen, auf welchen die einteilige Schalenkonstruktion 11, 12, 13 ruht und mit welchen sie gegenüber dem Rahmen 10 fixiert wird. Da lediglich vier Halterungen 27 in Gestalt von Querstegen 27 vorgesehen sind, gelingt ein Austausch der einteiligen Schalenkonstruktion 11, 12, 13 im Falle einer Beschädigung problemlos.

## Patentansprüche

1. Elektroroller, mit wenigstens einem Vorderrad (3) sowie einem Hinterrad (4), und mit einem Elektromotor (1), welcher von einem Akkumulator (2) mit elektrischer Energie versorgt wird, **dadurch gekennzeichnet, dass** der Akkumulator (2) in einem in Fahrtrichtung (F) hinter einem Sitz (8) befindlichen Heckbürzel (11) angeordnet ist.

2. Elektroroller nach Anspruch 1, **dadurch gekennzeichnet, dass** der Heckbürzel (11) neben dem Akkumulator (2) auch den Elektromotor (1) verkleidet und von außen her zugänglich ausgeführt ist und hierzu eine öffenbare Abdeckung (14) aufweist.

3. Elektroroller nach Anspruch 1 oder 2, **dadurch gekennzeichnet, dass** der Heckbürzel (11) zusammen mit einer Seitenverkleidung (12) sowie einer Vorderradverkleidung (13) eine einteilige Schalenkonstruktion (11, 12, 13) bildet.

4. Elektroroller nach einem der Ansprüche 1 bis 3, **dadurch gekennzeichnet, dass** der Akkumulator (2) oberhalb des Hinterrades (4) und in unmittelbarer Nachbarschaft zu einer Sitzstange (9) für den Sitz (8) an einem Rahmen (R) befestigt ist.

5. Elektroroller nach einem der Ansprüche 1 bis 4, **dadurch gekennzeichnet, dass** sich der Elektromotor (1) unterhalb des Akkumulators (2) in einer zwischen dem Hinterrad (4) und der Sitzstange (9) verbleibenden Aussparung (17) befindet.

6. Elektroroller nach einem der Ansprüche 1 bis 5, **dadurch gekennzeichnet, dass** der Akkumulator (2) auf einer im Wesentlichen parallel zu einer Hinterradschwinge (19) angeordneten Halterung (18) ruht.

7. Elektroroller nach einem der Ansprüche 1 bis 6, **dadurch gekennzeichnet, dass** die Halterung (18) die Sitzstange (9) mit der Hinterradschwinge (19) verbindet.

8. Elektroroller nach einem der Ansprüche 1 bis 7, **dadurch gekennzeichnet, dass** die Halterung (18) für den Akkumulator (2) einen angeschlossenen Spritzschutz (26) aufweist.

9. Elektroroller nach einem der Ansprüche 1 bis 8, **dadurch gekennzeichnet, dass** die Hinterradschwinge (19) in einen gleichgerichteten Rahmenunterzug (23) übergeht, welcher frontseitig eine Gabel (6) mit einem Lenker (7) und dem Vorderrad (3) trägt.

10. Elektroroller nach Anspruch 9, **dadurch gekennzeichnet, dass** der Rahmenunterzug (23) seitliche Halterungen (27) für die einteilige Schalenkonstruktion (11, 12, 13) aufweist.

## Geänderte Patentansprüche

### Geänderte Patentansprüche gemäss Regel 86(2) EPÜ.

**1.** Elektroroller, mit wenigstens einem Vorderrad (3) sowie einem Hinterrad (4), und mit einem Elektromotor (1), welcher von einem Akkumulator (2) mit elektrischer Energie versorgt wird, wobei der Akkumulator (2) in einem in Fahrtrichtung (F) hinter einem Sitz (8) befindlichen Heckbürzel (11) angeordnet ist,
**dadurch gekennzeichnet, dass**
der Heckbürzel (11) zusammen mit einer Seitenverkleidung (12) sowie einer Vorderradverkleidung (13) eine einteilige Schalenkonstruktion (11, 12, 13) bildet.

**2.** Elektroroller nach Anspruch 1, **dadurch gekennzeichnet, dass** der Heckbürzel (11) neben dem Akkumulator (2) auch den Elektromotor (1) verkleidet und von außen her zugänglich ausgeführt ist und hierzu eine öffenbare Abdeckung (14) aufweist.

**3.** Elektroroller nach Anspruch 1 oder 2, **dadurch gekennzeichnet, dass** der Akkumulator (2) oberhalb des Hinterrades (4) und in unmittelbarer Nachbarschaft zu einer Sitzstange (9) für den Sitz (8) an einem Rahmen (R) befestigt ist.

**4.** Elektroroller nach einem der Ansprüche 1 bis 3, **dadurch gekennzeichnet, dass** sich der Elektromotor (1) unterhalb des Akkumulators (2) in einer zwischen dem Hinterrad (4) und der Sitzstange (9) verbleibenden Aussparung (17) befindet.

**5.** Elektroroller nach einem der Ansprüche 1 bis 4, **dadurch gekennzeichnet, dass** der Akkumulator (2) auf einer im Wesentlichen parallel zu einer Hinterradschwinge (19) angeordneten Halterung (18) ruht.

**6.** Elektroroller nach Anspruch 5, **dadurch gekennzeichnet, dass** die Halterung (18) die Sitzstange (9) mit der Hinterradschwinge (19) verbindet.

**7.** Elektroroller nach einem der Ansprüche 1 bis 6, **dadurch gekennzeichnet, dass** die Halterung (18) für den Akkumulator (2) einen angeschlossenen Spritzschutz (26) aufweist.

**8.** Elektroroller nach Anspruch 5, **dadurch gekennzeichnet, dass** die Hinterradschwinge (19) in einen gleichgerichteten Rahmenunterzug (23) übergeht, welcher frontseitig eine Gabel (6) mit einem Lenker (7) und dem Vorderrad (3) trägt.

**9.** Elektroroller nach Anspruch 3, **dadurch gekennzeichnet, dass** der Rahmenunterzug (23) seitliche Halterungen (27) für die einteilige Schalenkonstruktion (11, 12, 13) aufweist.
